# EUROPEAN PATENT SPECIFICATION

(11) **EP 4 523 824 B1**
(45) Date of publication and mention of the grant of the patent: **05.08.2026**
(21) Application number: 23880137.7
(22) Date of filing: 16.10.2023
(51) Int. Cl.: B23D 15/08, B23D 33/02, B23Q 11/10, F28D 11/02, H01M 4/134, H01M 4/1395, H01M 4/38, H01M 10/04, B26D 7/08

(54) **SYSTEM FOR CUTTING LITHIUM METAL FOR NEGATIVE ELECTRODES**
SYSTEM ZUM SCHNEIDEN VON LITHIUMMETALL FÜR NEGATIVE ELEKTRODEN
SYSTÈME DE DÉCOUPE DE LITHIUM MÉTALLIQUE POUR ÉLECTRODES NÉGATIVES

(30) Priority: 17.10.2022 KR 20220132889; 13.10.2023 KR 20230137115
(43) Date of publication of application: 19.03.2025
(73) Proprietor: LG Energy Solution, Ltd., Seoul 07335 (KR)
(72) Inventor: HONG, Sukhyun, Daejeon 34122 (KR)
(74) Representative: Goddar, Heinz J.
(86) International application number: PCT/KR2023/015924
(87) International publication number: WO 2024/085560

(56) References cited:
- CN-U- 211 031 322
- CN-U- 217 507 388
- JP-A- 2018 014 220
- KR-A- 20210 007 673
- KR-A- 20210 007 673
- KR-A- 20210 052 853
- KR-A- 20210 052 853
- KR-B1- 102 098 089
- US-A1- 2020 083 517
- US-A1- 2022 152 693

## Description

### [Technical Field]

This application claims the benefit of priority to Korean Patent Application No. 10-2022-0132889 filed on October 17, 2022, and Korean Patent Application No. 10-2023-0137115 filed on October 13, 2003.

The present invention relates to a lithium metal cutting system for negative electrodes, and more particularly, the present invention relates to a cutting system for transporting and cutting lithium metal for use in negative electrodes, and for cooling the lithium metal during transport and cutting.

### [Background Art]

Lithium metal is used as the negative electrode in lithium ion batteries, and cutting lithium metal to cell size is essential in the process of manufacturing lithium ion batteries.

However, lithium metal has a low tensile strength at room temperature and easily sticks to materials such as molds or knives, so when cutting lithium metal, the lithium metal stuck to these materials must be frequently removed, which slows down the lithium metal cutting process.

In addition, since the lithium metal stuck to the material is difficult to remove, there is a problem of wasted lithium metal in the lithium metal cutting process, which increases the cost for manufacturing a secondary battery.

Korean Patent Laid-open Publication No. 10-2021-0007673 (hereinafter, "Cited Reference 001") discloses that a temperature control member is installed on a cutting device for cutting lithium metal to prevent lithium from easily sticking to the cutting device, thereby increasing the efficiency of the lithium cutting process and cutting lithium into a desired shape.

However, Cited Reference 001 discloses that the temperature control member is displaced only in the cutting device in Cited Reference 001, so the problem of lithium metal sticking to the rollers, etc. during the transfer process of lithium metal still occurs.

In addition, according to Cited Reference 001, the lithium metal needs to be cooled by the cutting device, but it is difficult to cool the lithium metal placed on the cutting device in a short time, so the lithium metal may need to be placed on the cutting device for a certain period of time to be sufficiently cooled. As a result, the time for the lithium metal cutting process increases, which may cause the lithium metal cutting process to slow down.

### [patent reference]

(Patent reference 1) Korean Patent Laid-open Publication No. 10-2021-0007673 (Publication Date: January 20, 2021) discloses the preamble of claim 1.

### [Disclosure]

### [Technical Problem]

The object of the present invention, which is proposed to solve the above problems, is to provide a device for manufacturing lithium electrodes and a method for manufacturing lithium electrodes for effectively cutting lithium metal in which the lithium metal does not stick to a roller or the like in the process of transporting the lithium metal, and the lithium metal is sufficiently cooled when it reaches the cutting device, so that the lithium metal is cooled to a desired temperature in the cutting device in a short time.

### [Technical Solution]

The above-mentioned objective of the present invention is achieved by a lithium metal cutting system according to claim 1.

According to the invention, the refrigerant tube of each of the plurality of rollers is provided with refrigerant, and the temperature of the refrigerant decreases from the lithium metal feeding portion to the lithium metal transport portion.

According to the invention, the temperature of the refrigerant is progressively lowered.

In one embodiment, the lithium metal cutting portion may comprise a cutting stage, and a cutting refrigerant tube may be disposed inside the lithium metal cutting stage.

In one embodiment, the refrigerant is also provided to the interior of the cutting refrigerant tube, and the temperature of the refrigerant provided to the interior of the cutting refrigerant tube may be lower than or equal to the temperature of the refrigerant provided to an adjacent refrigerant tube.

In one embodiment, at least some of the plurality of rollers may be disposed at different heights.

In one embodiment, the lithium metal feeding portion comprises a winding roller for winding the lithium metal, and a refrigerant may be provided into the interior of the winding roller.

In one embodiment, the refrigerant tube of each of the plurality of rollers is provided with refrigerant, and the refrigerant may have the same temperature as each other.

In one embodiment, the refrigerant is also provided into the cutting refrigerant tube, and the temperature of the refrigerant provided to the interior of the cutting refrigerant tube may be lower than or equal to the temperature of the refrigerant provided to an adjacent refrigerant tube.

### [Effects of the Invention]

The effect of the present invention is to increase the tensile strength of lithium metal by cooling the lithium metal during the transfer and cutting of the lithium metal for negative electrodes, so that the lithium metal does not stick to the material when cutting the lithium metal.

### [Description of Drawings]

FIG. 1 is a diagram illustrating a lithium metal cutting system for negative electrodes, according to one embodiment of the present invention.
FIG. 2 is a diagram illustrating a lithium metal cutting system for negative electrodes, according to another embodiment of the present invention.
FIG. 3 is a diagram illustrating a lithium metal cutting system for negative electrodes, according to another embodiment of the present invention.
FIG. 4 is a photograph of the cut surface of the lithium metal according to Comparative Example 1 of the present invention.
FIG. 5 is a photograph of the cut surface of the lithium metal according to Comparative Example 2 of the present invention.
FIG. 6 is a photograph of the cut surface of the lithium metal according to Example 1 of the present invention.
FIG. 7 is a photograph of the cut surface of the lithium metal according to Example 2 of the present invention.

### [Best Mode]

The detail of the embodiment of the present invention is provided in the following descriptions. However, the following descriptions are to be understood as exemplary for the purpose of facilitating the understanding of the present invention, and are not to be understood as limiting or defining the present invention. Also, the present invention is not limited to the drawings attached hereto. One of ordinary skill in the art can realize the present invention in various forms within the scope of the technical ideas of the present invention with reference to the following descriptions and the drawings attached hereto.

### Negative electrode

A negative electrode may comprise lithium metal. The negative electrode may be composed of pure lithium metal or lithium alloy, or it may be used by applying and drying a negative electrode active material on the lithium metal.

The lithium metal may comprise at least one of a pure lithium, a lithium alloy and a lithium metal complex oxide. The lithium alloy may comprise one selected from the group consisting of Al, Mg, K, Na, Ca, Sr, Ba, Si, Ge, Sb, Pb, In and Zn. The lithium metal complex oxide may be a metal (Me) oxide (MeOₓ) of lithium and one selected from the group consisting of Si, Sn, Zn, Mg, Cd, Ce, Ni and Fe, such as LiₓFe₂O₃ (wherein 0<0≤1) or LiₓWO₂ (wherein 0<x≤1).

The lithium metal according to the present invention may have a protective layer, like lithium metal with a conventional electrolyte. The protective layer may comprise any material that is conductive to lithium ions, does not interfere with the operation of the battery, and does not react with lithium. Examples thereof include a garnet-type ceramic protective layer, a protective layer composed of lithium-substituted polyacrylic acid, and a molybdenum disulfide-based protective layer. Any protective layer can be used as long as it can improve the stability of the lithium metal.

The lithium metal is typically made with a thickness of 3 µm to 500 µm. The lithium metal can also form microscopic irregularities on the surface to strengthen the binding of the lithium metal to the negative electrode active material or solid electrolyte, and can be used in various forms such as films, sheets, foils, nets, porous materials, foams, non-woven materials, etc.

The negative electrode active materials include, for example, carbon such as anthracite or graphitized carbon; LiₓFe₂O₃ (wherein 0≤x≤1), LiₓWO₂ (wherein 0≤x≤1), or SnₓMe₁₋ₓMe'_{y}O_{z} (wherein Me is Mn, Fe, Pb or Ge; Me' is Al, B, P or Si, Group 1, 2 or 3 elements of the periodic table, or halogens; 0<x≤1; 1≤y≤3; and 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ or Bi₂O₅; conductive polymers such as polyacetylene; and Li-Co-Ni based materials.

### Solid electrolyte

The solid electrolyte particles may include at least one of sulfide-based solid electrolyte particles, oxide-based solid electrolyte particles, and organic solid electrolyte particles. The solid electrolyte according to the present invention may utilize particles with coated or modified surfaces. Sulfide-based solid electrolytes have advantages over other solid electrolytes in terms of ionic conductivity and production cost. Accordingly, the present invention provides following embodiments for using sulfide-based solid electrolytes.

The sulfide-based solid electrolyte has the advantages of high lithium ion conductivity of 10⁻² to 10⁻³ S/cm, easiness to form a contact interface between the electrode and the electrolyte, and good mechanical strength and good mechanical flexibility. The sulfide-based solid electrolyte powder contains sulfur (S) and has the ionic conductivity of a metal in Group 1 or 2 of the periodic table, and may include a Li-P-S-based glass or a Li-P-S-based glass ceramic. The sulfide-based solid electrolyte is not specifically limited by the present invention, and any sulfide-based material known for use in lithium battery applications may be used. For example, sulfide-based solid electrolytes include Li₆PS₅Cl(LPSCl), Thio-LISICON(Li_{3.25}Ge_{0.25}P_{0.75}S₄), Li₂S-P₂S₅-LiCl, Li₂S-SiS₂, LiI-Li₂S-SiS₂, LiI-Li₂S-P₂S₅, LiI-Li₂S-P₂O₅, LiILi₃PO₄-P₂S₅, Li₂S-P₂S₅, Li₃PS₄, Li₇P₃S₁₁, LiI-Li₂S-B₂S₃, Li₃PO₄Li-S-Si₂S, Li₃PO₄-Li₂S-SiS₂, LiPO₄-Li₂S-SiS, Li₁₀GeP₂S₁₂, Li_{9.54}Si_{1.74}P_{1.44}S_{11.7}Cl_{0.3}, and Li₇P₃S₁₁.

The thickness of the solid electrolyte can be selected depending on the desired characteristics of the battery. For example, the thickness of the electrolyte when it is densified by pressing may preferably be from about 0.1 µm to 1000 µm, more preferably from about 1 µm to 100 µm, and even more preferably from about 10 µm to 50 µm.

### Positive electrode

The positive electrode may be manufactured, for example, by applying a positive electrode compound made by mixing a positive electrode active material consisting of positive electrode active material particles, a conductive material and a binder, to a positive electrode current collector, and the filler may be further added to the positive electrode compound, as needed.

The positive electrode current collector is generally manufactured with a thickness of about 3 µm to 500 µm, and is not particularly limited as long as it has a high conductivity without causing any chemical changes in the battery, for example, one selected from stainless steel, aluminum, nickel, titanium, and the aluminum or stainless steel whose surface is treated with carbon, nickel titanium or silver, and specifically, aluminum may be used. The current collector may also have microscopic irregularities formed on its surface to increase the adhesion of the positive electrode active material, and may be in the form of a film, sheet, foil, net, porous material, foam, non-woven material, or the like.

In addition to the positive electrode active material particles, the positive electrode active material can comprise, but is not limited to, a layered compound such as lithium nickel oxide (LiNiO₂) or a compound substituted with one or more transition metals; a lithium manganese oxide represented by formula Li₁₊ₓMn₂₋ₓO₄ (wherein x is 0 to 0.33), such as LiMnO₃, LiMn₂O₃ or LiMnO₂; lithium copper oxides (Li₂CuO₂); vanadium oxides, such as LiV₃O₈, LiV₃O₄, V₂O₅ or Cu₂V₂O₇; Ni site-type lithium nickel represented by LiNi₁₋ₓMₓO₂ (wherein M is Co, Mn, Al, Cu, Fe, Mg, B or Ga, and x is 0.01 to 0.3); lithium manganese complex oxides represented by formula LiMn₂₋ₓMₓO₂ (wherein M is Co, Ni, Fe, Cr, Zn or Ta, and x is 0.01 to 0.1) or Li₂Mn₃MO₈ (wherein M is Fe, Co, Ni, Cu or Zn); LiMn₂O₄, wherein a portion of the Li is substituted by an alkaline earth metal ion; disulfide compounds; and Fe₂(MoO₄)₃.

The conductive material may typically be added in an amount of 0.1 to 30 wt%, based on the total weight of the mixture comprising the positive electrode active material. The materials are not particularly limited, as long as they are conductive without causing any chemical changes in the battery, for example, graphite such as natural or artificial graphite; carbon black such as carbon black, acetylene black, ketjen black, channel black, furnace black, lamp black or summer black; conductive fibers such as carbon fibers or metal fibers; metal powders such as carbon fluoride, aluminum or nickel powder; conductive whiskers such as zinc oxide or potassium titanate; conductive metal oxides such as titanium oxide; or conductive materials such as polyphenylene derivatives.

The binder included in the positive electrode is a component that assists in the bonding of the active material to the conductive material and the bonding to the current collector, and is typically added in an amount of 0.1 to 30 wt% based on the total weight of the mixture comprising the positive electrode active material. Due to the addition of the binder, the bonding of the positive electrode to the solid electrolyte can also be increased. The binder of the present invention is not particularly limited in this specification, and known methods may be used. The binder can be any one or mixture of two or more selected from the group consisting of polyamide-imide (PAI), polyimide (PI), polyamide (PA), polyamic acid, polyethylene oxide (PEO), polystyrene (PS), PEP-MNB (poly(ethylene-copropyleneco-5-methylene-2-norbornene), VDF (polyvinylidene fluoride), PVDF-HFP (poly(vinylidene fluoride-co-hexafluoropropylene)), PS-NBR (polystyrene nitrile-butadiene rubber), PMMANBR (poly(methacrylate)nitrile-butadiene rubber), and combinations thereof.

The surface of the positive electrode active material layer may be coated with a material such as LiNbO₃ to form a buffer layer. The buffer layer can be formed with a buffer layer forming material of 10 nm or less to suppress the interfacial resistance between the positive electrode and the solid electrolyte.

The structure of the above secondary battery is exemplarily described for the purpose of facilitating the understanding of the present invention. The present invention is directed to cutting a lithium metal used for the negative electrode. Referring to the drawings attached hereto, a system for cutting lithium metal for negative electrodes according to the present invention is described hereinafter.

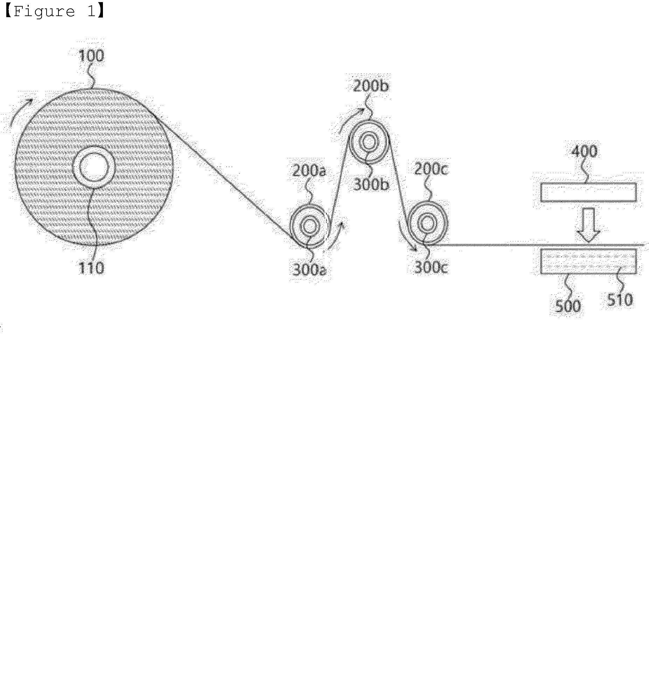

FIG. 1 is a diagram illustrating a lithium metal cutting system for negative electrodes, according to one embodiment of the present invention.

Referring to FIG. **1****,** a lithium metal cutting system may include a lithium metal feeding portion, a lithium metal transport portion and a lithium metal cutting portion. The lithium metal feeding portion may include a lithium metal (100) and a winding roller (110) on which the lithium metal (100) is rolled. The lithium metal transport portion may include a first roller (200a), a second roller (200b) and a third roller (200c). A first refrigerant pipe (300a) may be formed in the first roller (200a), a second refrigerant pipe (300b) may be formed in the second roller (200b), and a third refrigerant pipe (300c) may be formed in the third roller (200c). The lithium metal cutting portion may include a cutting member (400) and a cutting stage (500). A cutting refrigerant pipe (510) may be formed in the cutting stage (500).

The lithium metal feeding portion may be configured to feed lithium metal to the lithium metal cutting portion, such that the winding roller (110) may unwind the lithium metal in the form of a continuous uncut film. A refrigerant pipe (not shown in the drawing) through which a refrigerant flows may be arranged in the winding roller (110). By doing so, the lithium metal curled on the winding roller (110) can be cooled to prevent the lithium metal from sticking to the lithium metal transport portion or the lithium metal cutting portion due to its low tensile strength during the lithium metal transport process. In other words, the refrigerant flowing in the refrigerant tube (not shown in the drawing) in the winding roller (110) can cool the lithium metal to increase the tensile strength of the lithium metal.

The types of refrigerants are not limited. For example, the refrigerant may include coolant, liquid nitrogen and liquid helium. However, this is exemplary, and various substances may be used as the refrigerant without limitation as long as the purpose of cooling the lithium metal to increase the tensile strength of the lithium metal can be achieved.

The lithium metal transport portion may convey lithium metal provided from the lithium metal feeding portion. The lithium metal transport portion may convey the lithium metal to the lithium metal cutting portion. Thereby, the lithium metal in the form of a continuous film may be transported to the lithium metal cutting portion and cut.

Furthermore, the lithium metal transport portion may play a role of cooling the lithium metal, while transporting the lithium metal. The first refrigerant pipe (300a), the second refrigerant pipe (300b), and the third refrigerant pipe (300c) may each include a refrigerant. The first refrigerant pipe (300a), the second refrigerant pipe (300b), and the third refrigerant pipe (300c) may be provided with the refrigerant through a passage connected to the outside. Each of the refrigerants may comprise the aforementioned coolant, liquid nitrogen, and liquid helium. Furthermore, as mentioned above, various substances may be used as the refrigerants, provided that the purpose of increasing the tensile strength of the lithium metal by cooling the lithium metal can be achieved.

The first refrigerant tube (300a), the second refrigerant tube (300b), and the third refrigerant tube (300c) may each have a different temperature of refrigerant passing therethrough. For example, the temperature of the refrigerant may decrease as it moves toward the first refrigerant tube (300a), the second refrigerant tube (300b), and the third refrigerant tube (300c). Although the temperature in the first to third refrigerant tubes (300a, 300b, 300c) may be progressively lowered, the temperatures in the second and third refrigerant tubes (300a, 300b) may each be lower than the temperature in the first refrigerant tube (300a) and equal to each other. In addition, the temperatures in the first to third refrigerant tubes (300a, 300b, 300c) may be set without limitation as long as they can cool down the lithium metal to increase its tensile strength.

The first to third rollers (200a, 200b, 200c) may be disposed at different heights. Accordingly, the lithium metal in the form of a film may be transported in a bent state in accordance with the positions of the first to third rollers (200a, 200b, 200c). Since the lithium metal has a low tensile strength, it needs to be sufficiently cooled before reaching the lithium metal cutting portion, and, in the lithium metal cutting system according to the present invention, since more surface area is exposed to the lithium metal transport portion as the first to third rollers (200a, 200b, 200c) are disposed at different heights, the lithium metal may be cooled relatively more by the first to third rollers (200a, 200b, 200c).

However, in the embodiments, the temperatures of the refrigerant provided to the first to third refrigerant tubes (300a, 300b, 300c) may be the same as each other.

The lithium metal cutting portion may cut the lithium metal delivered in the form of a film. The lithium metal may be located on the cutting stage (500). In this process, a cutting refrigerant pipe (510) is formed within the cutting stage (500), and a refrigerant may flow in the cutting refrigerant pipe (510). The cutting refrigerant pipe (510) may be provided with the refrigerant through a passage connected to the outside. The refrigerant may include coolant, liquid nitrogen and liquid helium as described above. Furthermore, as mentioned above, various substances may be used as the refrigerant, as long as the purpose of cooling the lithium metal to increase the tensile strength of the lithium metal can be achieved. Due to the cutting refrigerant tube (510), the lithium metal may be cooled once again on the cutting stage (500). Accordingly, the lithium metal may have an increased tensile strength on the cutting stage (500). That is, the lithium metal may be neatly cut by the cutting member (400). Here, the definition of "neatly cut" means that the lithium metal is cut without sticking to the cutting member. The temperature of the refrigerant flowing through the cutting refrigerant pipe (510) may be less than or equal to the temperature of the refrigerant flowing through the refrigerant pipe of an adjacent roller.

Various materials may be used as the cutting member (400), as long as it is capable of cutting the lithium metal. For example, a knife or a tabulating press may be used as the cutting member (400).

However, in the embodiments, the lithium metal cutting portion may not be provided with the refrigerant. If the lithium metal is sufficiently cooled in the lithium metal feeding portion to ensure tensile strength of the lithium metal, the lithium metal transported into the lithium metal cutting portion may be cut directly without further cooling.

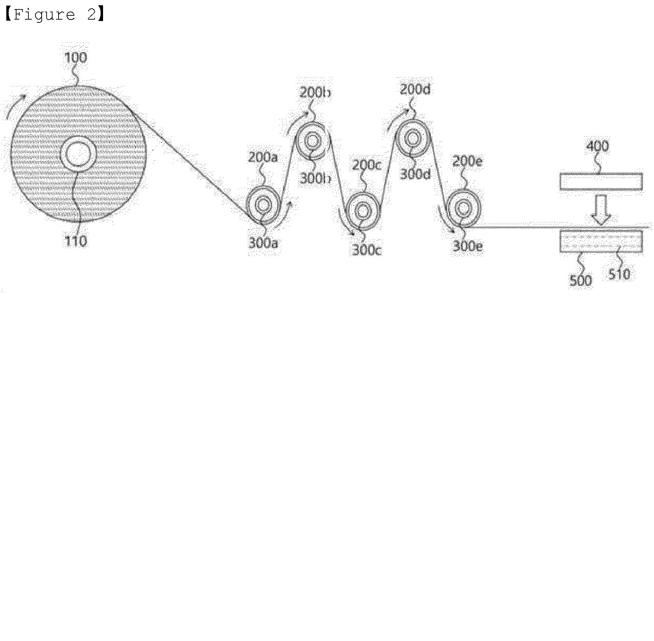

FIG. 2 is a diagram illustrating a lithium metal cutting system for negative electrodes, according to another embodiment of the present invention. FIG. 2 may be substantially identical to FIG. 1 except that five rollers are used. Accordingly, a description of the redundant structure is omitted herein.

Referring to FIG. 2, a lithium metal cutting system may include a lithium metal feeding portion, a lithium metal transport portion and a lithium metal cutting portion. The lithium metal feeding portion may include a lithium metal (100) and a winding roller (110) on which the lithium metal (100) is rolled. The lithium metal transport portion may include a first roller (200a), a second roller (200b), a third roller (200c), a fourth roller (200d) and a fifth roller (200e). A first refrigerant tube (300a) may be formed in the first roller (200a), a second refrigerant tube (300b) may be formed in the second roller (200b), a third refrigerant tube (300c) may be formed in the third roller (200c), a fourth refrigerant tube (300d) may be formed in the fourth roller (200d) and a fifth refrigerant tube (300e) may be formed in the fifth roller (200e). The lithium metal cutting portion may include a cutting member (400) and a cutting stage (500). In the cutting stage (500), a cutting refrigerant pipe (510) may be formed.

In the winding roller (110), a refrigerant pipe (not shown in the drawing) through which a refrigerant flows may be arranged. By doing so, it is possible to cool the lithium metal curled on the winding roller (110) to prevent the lithium metal from sticking together at the lithium metal feeding portion due to its low tensile strength, or to prevent the lithium metal from sticking to the lithium metal transport portion or the lithium metal cutting portion, during the lithium metal transport process. In other words, the refrigerant flowing through the refrigerant pipe (not shown in the drawing) in the winding roller (110) can cool the lithium metal to increase the tensile strength of the lithium metal.

The lithium metal transport portion may serve to cool the lithium metal, while transporting the lithium metal. Each of the first to fifth refrigerant tubes (300a, 300b, 300c, 300d, 300e) may comprise a refrigerant. Each of the first to fifth refrigerant tubes (300a, 300b, 300c, 300d, 300e) may be provided with the refrigerant through a passage connecting to the outside. Each refrigerant may comprise the aforementioned coolant, liquid nitrogen and liquid helium. Furthermore, as mentioned above, various substances may be used as the refrigerant, provided that the purpose of cooling the lithium metal to increase the tensile strength of the lithium metal can be achieved.

Each of the first to fifth refrigerant tubes (300a, 300b, 300c, 300d, 300e) may have a different temperature of refrigerant flowing therethrough. For example, the temperature of the refrigerant may decrease from the first refrigerant tube (300a) to the fifth refrigerant tube (300e). The temperature of the first to fifth refrigerant tubes (300a, 300b, 300c, 300d, 300e) may decrease sequentially and progressively, but at least some of the refrigerant tubes may have the same temperature. In addition, the temperature of the first to fifth refrigerant tubes (300a, 300b, 300c, 300d, 300e) may be set without limitation as long as they can cool down the lithium metal to increase its tensile strength.

The first to fifth rollers (200a, 200b, 200c, 200d, 200e) may be disposed at different heights. Accordingly, the lithium metal in the form of a film may be transported in a bent state in accordance with the positions of the first to fifth rollers (200a, 200b, 200c, 200d, 200e). Since the lithium metal has a low tensile strength, it needs to be sufficiently cooled before reaching the lithium metal cutting portion, and, in the lithium metal cutting system according to the present invention, since more surface area is exposed to the lithium metal transport portion as the first to fifth rollers (200a, 200b, 200c, 200d, 200e) are disposed at different heights from each other, the lithium metal can be cooled relatively more by the first to fifth rollers (200a, 200b, 200c, 200d, 200e).

In addition, the embodiment of FIG. 2 may allow more cooling of the lithium metal as more rollers are arranged compared to the embodiment of FIG. **1****.**

However, in the embodiments, the temperatures of the refrigerant provided to the first through fifth refrigerant tubes (300a, 300b, 300c, 300d, 300e) may be the same as each other.

The lithium metal cutting portion may cut lithium metal delivered in the form of a film. The lithium metal may be located on the cutting stage (500). In this process, a cutting refrigerant pipe (510) is formed within the cutting stage (500), and a refrigerant may flow in the cutting refrigerant pipe (510). The cutting refrigerant pipe (510) may be provided with the refrigerant through a passage connected to the outside. Due to the cutting refrigerant tube (510), the lithium metal may be cooled once again on the cutting stage (500). Accordingly, the lithium metal may have an increased tensile strength on the cutting stage (500). That is, the lithium metal may be neatly cut by the cutting member (400). The definition of "neatly cut" means that the lithium metal is cut without sticking to the cutting member. The temperature of the refrigerant flowing through the cutting refrigerant pipe (510) may be less than or equal to the temperature of the refrigerant flowing through the refrigerant pipe of an adjacent roller.

Various materials may be used as the cutting member (400), as long as it is capable of cutting the lithium metal. For example, a knife or a tabulating press may be used as the cutting member (400).

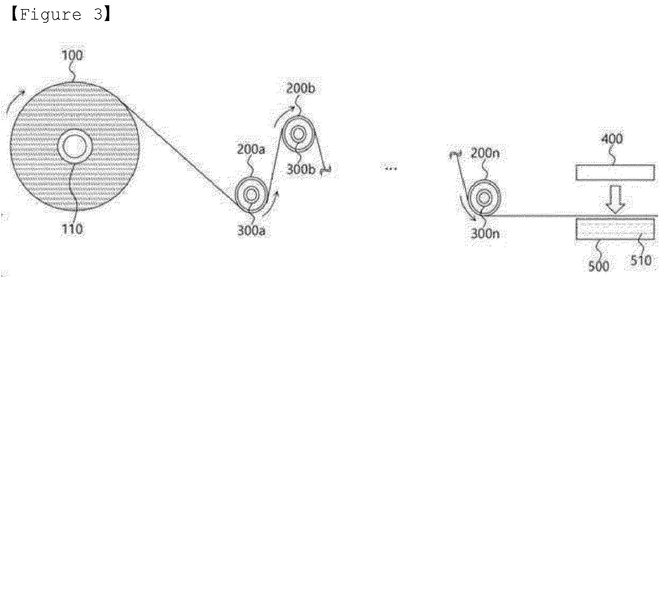

FIG. 3 is a diagram illustrating a lithium metal cutting system for negative electrodes, according to another embodiment of the present invention. FIG. 3 may be substantially identical to FIGS. 1 and 2, except that first to nth rollers are used. Accordingly, a description of the redundant structure is omitted herein.

Referring to FIG. 3, the lithium metal cutting system according to the present invention can be designed in a variety of ways without limiting the number of rollers. The rollers may be freely used as long as they sufficiently cool the lithium metal. According to the invention, first to nth rollers (200a, 200b, ..., 200n) are used to cool the lithium metal. The first to nth rollers (200a, ..., 200n) each include a refrigerant tube (300a, 300b, ..., 300n).

The temperature of the refrigerant flowing through the refrigerant tubes (300a, 300b, ..., 300n) is progressively lowered. That is, the temperature of the refrigerant is lowered from the first refrigerant tube (300a) to the nth refrigerant tube (300n).

According to the invention, if the temperature of the refrigerant in the first refrigerant tube (300a) is 10 °C to -10 °C, the n^{th} refrigerant tube (300n) is set to be -40 °C to -50 °C, with the temperature of the refrigerant decreasing as it goes from the first refrigerant tube (300a) to the n^{th} refrigerant tube (300n).

The lithium metal (100) just before being finally cut is preferably cooled to a temperature of about -10 °C to -30 °C. Accordingly, as the lithium metal (100) at room temperature is transported by the rollers, its temperature is preferably gradually reduced so that by the time it reaches the cutting stage (500), it is at a temperature of -10 °C to -30 °C. The decrease in temperature of the lithium metal (100) may be reduced by a certain percentage (e.g., a certain percent), or may be reduced by a certain range, and may be applied in any manner that results in the temperature of the lithium metal (100) being in the temperature range of -10 °C to -30 °C upon arrival at the cutting stage (500).

If the refrigerant flows only in the cutting stage (500), the cooling time of the lithium metal (100) is too short to sufficiently cool down the lithium metal (100). Therefore, when the lithium metal (100) is repeatedly cut, the cut surface is not formed smoothly. If the lithium metal (100) is transported to the cutting stage (500) while cooling proceeds through the rollers, the temperature of the lithium metal (100) can be lowered to a desired temperature so that the cut surface can be formed smoothly.

As described above, the embodiments of the present invention are provided. However, the descriptions are to be understood as exemplary for the purpose of facilitating the understanding of the present invention, and are not to be understood as limiting the present invention. Those skilled in the art can make appropriate modifications to the embodiments and working examples of the present invention, including omitting, changing, substituting, or adding other constitutions to all or some of the embodiments and working examples of the present invention, with reference to this specification and the drawings attached hereto, within the scope of the technical idea of the present invention. Accordingly, the scope for which protection is sought of the present invention should be construed in accordance with the following claims, and all technical ideas thereof should be construed to be included in the scope of the claims.

All terms and expressions used in this specification are to be understood by one of ordinary skill in the art, unless otherwise defined. Further, the terms and expressions used in this specification are to be construed broadly and are not to be construed in a restrictive sense.

In this specification, the expression "comprise" does not exclude the existence or addition of one or more other components in addition to the constitutions mentioned above.

In addition, as used herein, expressions of the singular form are intended to include the plural form unless the context explicitly excludes it.

Hereinafter, Examples are presented to facilitate an understanding of the present invention. The following Examples are provided to illustrate the present invention, but the present invention is not limited thereto.

### Example

### Example 1

Referring to FIG. 1, after preparing a lithium metal feeding portion including a lithium metal (100) and a winding roller (110) on which the lithium metal (100) is rolled, a lithium metal sheet was put into a lithium metal transport portion including a first roller (200a), a second roller (200b), and a third roller (200c). A first refrigerant pipe (300a) was formed in the first roller (200a), a second refrigerant pipe (300b) was formed in the second roller (200b), and a third refrigerant pipe (300c) was provided in the third roller (200c). The refrigerant temperature of the first refrigerant tube (300a) was set to -20 °C, the refrigerant temperature of the second refrigerant tube (300b) was set to -30 °C, and the refrigerant temperature of the third refrigerant tube (300c) was set to - 40 °C. Then, the lithium metal sheet was transferred to the lithium metal transport portion at a speed of 1 cm/s. The lithium metal sheet cooled to -20 °C was then cut with a knife.

### Example 2

The lithium metal sheet was cut in the same manner as in Example 1, except that the refrigerant temperatures of the first refrigerant tube (300a) and the third refrigerant tube (300c) were both set to be -30 °C.

### Comparative Example 1

Using a lithium metal transport portion without a refrigerant tube, the lithium metal sheet was cut in the same way as in Example 1, except that no cooling process was performed.

### Comparative Example 2

The lithium metal sheet was cut in the same way as in Example 1, except that the lithium metal sheet was cooled by conventional liquid nitrogen cooling instead of a refrigerant tube by immersing the sheet in liquid nitrogen for 10 seconds.

### Experimental Example 1: Evaluation of the cross-section of a lithium metal sheet

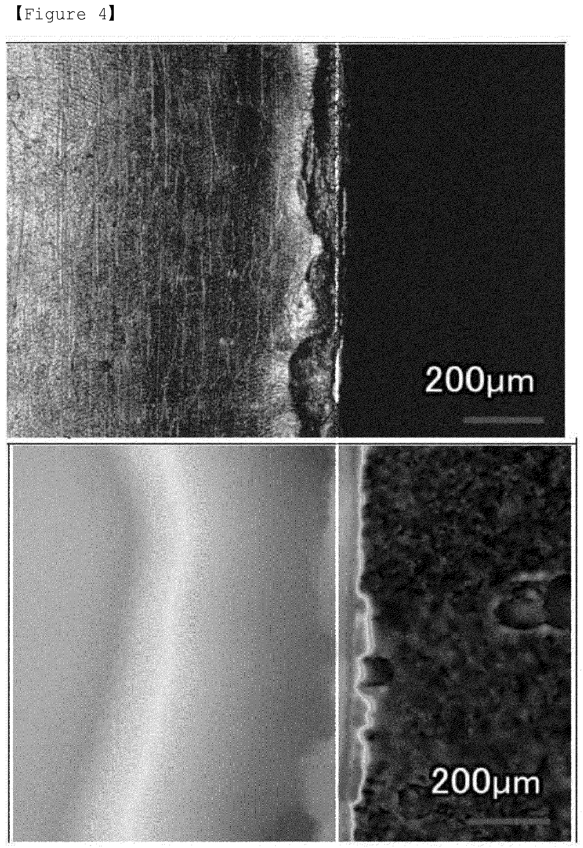

Cross-sections of the lithium metal sheets manufactured in the Working Examples and Comparative Examples were photographed in FIGS. 4 to 7. The upper part of each drawing shows a photograph of the top of the cut surface taken with an optical microscope, and the lower part shows the illuminance of the cross-section of the lithium metal sheet taken with a laser optical illuminance meter.

FIG. 4 is a cross-section of a lithium metal sheet manufactured in Comparative Example 1 that has not undergone the cooling process, showing that the cut surface is not smooth.

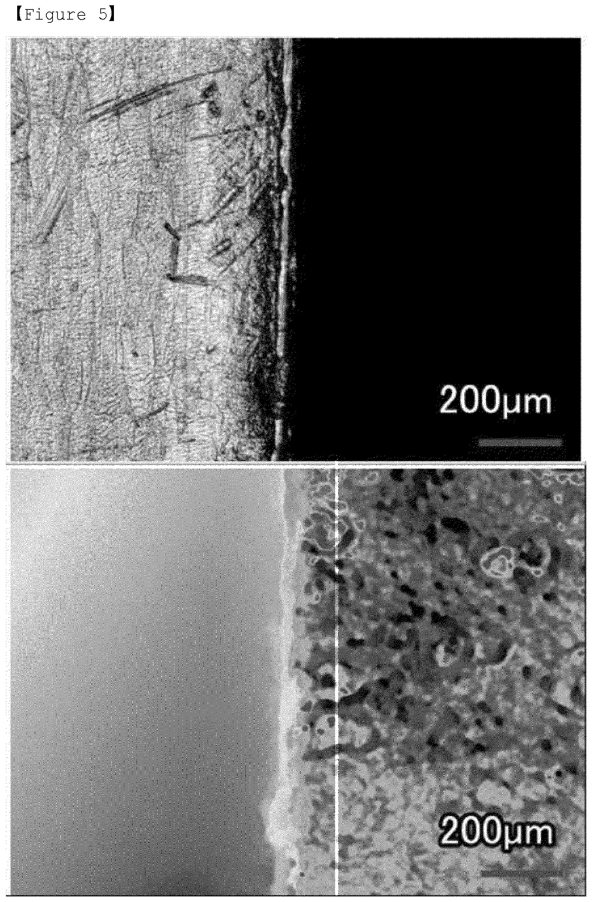

FIG. 5 is a cross-section of a lithium metal sheet prepared in Comparative Example 2 and cooled by immersion in liquid nitrogen, showing a smooth cut surface.

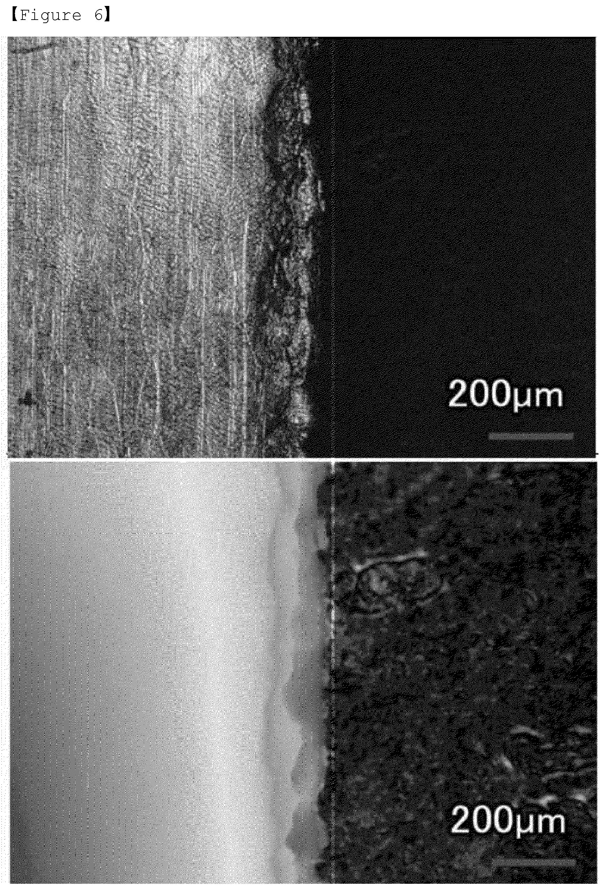

FIG. 6 is a cross-section of a lithium metal sheet produced in Example 1, which was cooled by setting the temperature of the refrigerant pipe to gradually decrease, and it can be seen that the cut surface is smoother than the conventional liquid nitrogen cooling method.

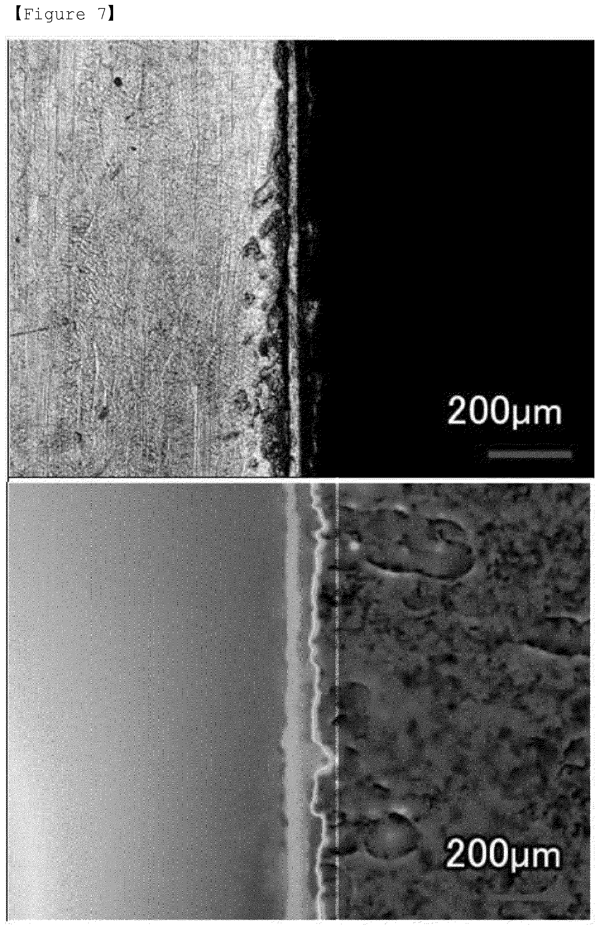

FIG. 7 is a cross-section of a lithium metal sheet manufactured in Example 2 that has been cooled to equalize the temperature of the refrigerant tube, and it can be seen that the cut surface is somewhat less smooth than in Example 1.

Each of the exemplary embodiments described herein can be combined with each other, and unless contradicted, what is described in a particular embodiment may be equally applicable to other embodiments, even if not described in the other embodiments.

### [Reference Numerals].

100: Lithium metal
110: Winding roller
200A, 200b, 200c, 200d, 200e: 1^{st} to 5^{th} rollers
300A, 300b, 300c, 300d, 300e: 1^{st} to 5^{th} refrigerant tubes
400: Cutting member
500: Cutting stage
510: Cut refrigerant tube

## Claims

1. A cutting system suitable for lithium metal negative electrodes, including a lithium metal feeding portion configured for providing a lithium metal (100);
a lithium metal transport portion configured for transporting the lithium metal (100) provided from the lithium metal feeding portion; and
a lithium metal cutting portion configured for cutting the lithium metal (100) conveyed by the lithium metal transport portion,
wherein the lithium metal transport portion comprises a plurality of rollers (200a-200n); and a refrigerant tube (300a-300n) disposed in each of the plurality of rollers (200a-200n),
wherein each refrigerant tube (300a-300n) includes a refrigerant,
**characterized in that**
the lithium metal transport portion is adapted to cool the lithium metal (100) while transporting the lithium metal (100) by progressively lowering the temperature of the refrigerant flowing through the refrigerant tubes (300a-300n) from a first refrigerant tube (300a) of a first roller (200a) of the plurality of rollers (200a-200n) to an nth refrigerant tube (300n) of an nth roller (200n) of the plurality of rollers (200a-200n), and
wherein the temperature of the refrigerant in the first refrigerant tube (300a) is settable to be 10 °C to -10 °C, and the temperature of the refrigerant in the nth refrigerant tube (300n) is settable to be -40 °C to -50 °C.

2. The cutting system suitable for lithium metal negative electrodes, according to claim 1, **characterized in that** the lithium metal cutting portion includes a cutting stage (500), and
a cutting refrigerant tube (510) is disposed in the lithium metal cutting stage (500).

3. The cutting system suitable for lithium metal negative electrodes, according to claim 2, **characterized in that** the cutting refrigerant tube (510) is also provided with the refrigerant thereinto, and
the temperature of the refrigerant provided in the cutting refrigerant tube (510) is lower than or equal to the temperature of the refrigerant provided to an adjacent refrigerant tube (300n) in an adjacent roller (200n) of the lithium metal transport portion.

4. The cutting system suitable for lithium metal negative electrodes, according to claim 1, **characterized in that** at least some of the plurality of rollers (200a-200n) are disposed at different heights.

5. The cutting system suitable for lithium metal negative electrodes, according to claim 1, **characterized in that** the lithium metal feeding portion includes a winding roller (110) for winding the lithium metal, and
a refrigerant is provided into the winding roller (110).

## Patentansprüche

1. Ein Schneidsystem, das für Lithiummetall-Negativelektroden geeignet ist, umfassend: einen Lithiummetall-Zuführabschnitt, der dazu eingerichtet ist, ein Lithiummetall (100) bereitzustellen;
einen Lithiummetall-Transportabschnitt, der dazu eingerichtet ist, das von dem Lithiummetall-Zuführabschnitt bereitgestellte Lithiummetall (100) zu transportieren; und
einen Lithiummetall-Schneidabschnitt, der dazu eingerichtet ist, das von dem Lithiummetall-Transportabschnitt geförderte Lithiummetall (100) zu schneiden,
wobei der Lithiummetall-Transportabschnitt eine Vielzahl von Walzen (200a-200n) und ein in jeder der Vielzahl von Walzen (200a-200n) angeordnetes Kältemittelrohr (300a-300n) aufweist,
wobei jedes Kältemittelrohr (300a-300n) ein Kältemittel enthält,
**dadurch gekennzeichnet, dass** der Lithiummetall-Transportabschnitt dazu eingerichtet ist, das Lithiummetall (100) während des Transports des Lithiummetalls (100) zu kühlen, indem die Temperatur des durch die Kältemittelrohre (300a-300n) strömenden Kältemittels von einem ersten Kältemittelrohr (300a) einer ersten Walze (200a) der Vielzahl von Walzen (200a-200n) zu einem n-ten Kältemittelrohr (300n) einer n-ten Walze (200n) der Vielzahl von Walzen (200a-200n) progressiv abgesenkt wird, und
wobei die Temperatur des Kältemittels in dem ersten Kältemittelrohr (300a) auf 10 °C bis -10 °C einstellbar ist und die Temperatur des Kältemittels in dem n-ten Kältemittelrohr (300n) auf -40 °C bis -50 °C einstellbar ist.

2. Schneidsystem, das für Lithiummetall-Negativelektroden geeignet ist, nach Anspruch 1, **dadurch gekennzeichnet, dass** der Lithiummetall-Schneidabschnitt einen Schneidtisch (500) umfasst und
ein Schneid-Kältemittelrohr (510) in dem Lithiummetall-Schneidtisch (500) angeordnet ist.

3. Schneidsystem, das für Lithiummetall-Negativelektroden geeignet ist, nach Anspruch 2, **dadurch gekennzeichnet, dass** das Schneid-Kältemittelrohr (510) ebenfalls mit dem Kältemittel versehen ist und
die Temperatur des in dem Schneid-Kältemittelrohr (510) bereitgestellten Kältemittels niedriger als oder gleich der Temperatur des Kältemittels ist, das einem benachbarten Kältemittelrohr (300n) in einer benachbarten Walze (200n) des Lithiummetall-Transportabschnitts zugeführt wird.

4. Schneidsystem, das für Lithiummetall-Negativelektroden geeignet ist, nach Anspruch 1, **dadurch gekennzeichnet, dass** zumindest einige der Vielzahl von Walzen (200a-200n) auf unterschiedlichen Höhen angeordnet sind.

5. Schneidsystem, das für Lithiummetall-Negativelektroden geeignet ist, nach Anspruch 1, **dadurch gekennzeichnet, dass** der Lithiummetall-Zuführabschnitt eine Wickelwalze (110) zum Aufwickeln des Lithiummetalls umfasst und
ein Kältemittel in die Wickelwalze (110) bereitgestellt wird.

## Revendications

1. Système de découpe convenant pour des électrodes négatives de lithium métal, incluant une partie d'alimentation de lithium métal configurée pour fournir un lithium métal (100) ;
une partie de transport de lithium métal configurée pour transporter le lithium métal (100) fourni par la partie d'alimentation de lithium métal ; et
une partie de découpe de lithium métal configurée pour couper le lithium métal (100) transporté par la partie de transport de lithium métal,
dans lequel la partie de transport de lithium métal comprend une pluralité de rouleaux (200a-200n) ; et un tube de réfrigérant (300a-300n) disposé dans chaque rouleau de la pluralité de rouleaux (200a-200n),
dans lequel chaque tube de réfrigérant (300a-300n) inclut un réfrigérant,
**caractérisé en ce que** la partie de transport de lithium métal est adaptée pour refroidir le lithium métal (100) pendant le transport du lithium métal (100) en abaissant progressivement la température du réfrigérant s'écoulant à travers les tubes de réfrigérant (300a-300n) depuis un premier tube de réfrigérant (300a) d'un premier rouleau (200a) de la pluralité de rouleaux (200a-200n) vers un énième tube de réfrigérant (300n) d'un énième rouleau (200n) de la pluralité de rouleaux (200a-200n), et
dans lequel la température du réfrigérant dans le premier tube de réfrigérant (300a) peut être réglée pour être 10°C à -10°C, et la température du réfrigérant dans le énième tube de réfrigérant (300n) peut être réglée pour être -40°C à -50°C.

2. Système de découpe convenant pour des électrodes négatives de lithium métal selon la revendication 1, **caractérisé en ce que** la partie de découpe de lithium métal inclut un stade de découpe (500), et
un tube de réfrigérant de découpe (510) est disposé dans le stade de découpe de lithium métal (500).

3. Système de découpe convenant pour des électrodes négatives de lithium métal selon la revendication 2, **caractérisé en ce que** le tube de réfrigérant de découpe (510) est aussi fourni avec le réfrigérant à l'intérieur de celui-ci, et
la température du réfrigérant fourni dans le tube de réfrigérant de découpe (510) est inférieure ou égale à la température du réfrigérant fourni à un tube de réfrigérant adjacent (300n) dans un rouleau adjacent (200n) de la partie de transport de lithium métal.

4. Système de découpe convenant pour des électrodes négatives de lithium métal selon la revendication 1, **caractérisé en ce qu'**au moins un certain nombre de la pluralité de rouleaux (200a-200n) sont disposés à différentes hauteurs.

5. Système de découpe convenant pour des électrodes négatives de lithium métal selon la revendication 1, **caractérisé en ce que** la partie d'alimentation de lithium métal inclut un rouleau d'enroulement (110) pour enrouler le lithium métal, et
un réfrigérant est fourni dans le rouleau d'enroulement (110).
